# EUROPÄISCHE PATENTSCHRIFT

(11) **EP 2 874 793 B1**
(45) Veröffentlichungstag und Bekanntmachung des Hinweises auf die Patenterteilung: **14.09.2016**
(21) Anmeldenummer: 13739204.9
(22) Anmeldetag: 18.07.2013
(51) Int. Cl.: B29C 45/66

(54) **SCHLIESSEINHEIT FÜR EINE KUNSTSTOFFSPRITZGIESSMASCHINE**
CLAMPING UNIT FOR PLASTICS INJECTION MOULDING MACHINE
UNITÉ DE FERMETURE POUR UNE MACHINE DE MOULAGE PAR INJECTION DE MATIÈRE PLASTIQUE

(30) Priorität: 18.07.2012 DE 102012106453
(43) Veröffentlichungstag der Anmeldung: 27.05.2015
(73) Patentinhaber: KraussMaffei Technologies GmbH, 80997 München (DE)
(72) Erfinder: AMMER, Daniel, 81735 München (DE); HOLZINGER, Georg, 81245 München (DE); RADERMACHER, Tobias, 01099 Dresden (DE); HANKE, Uwe, 01454 Radeberg (DE)
(74) Vertreter: Wilhelm, Ludwig
(86) Internationale Anmeldenummer: PCT/EP2013/065144
(87) Internationale Veröffentlichungsnummer: WO 2014/013003

(56) Entgegenhaltungen:
- EP-A1- 0 856 391
- DE-A1- 19 600 461
- JP-A- S6 030 321
- JP-A- S6 111 214

## Beschreibung

Die vorliegende Erfindung betrifft eine Schließeinheit für eine Kunststoffspritzgießmaschine gemäß dem Oberbegriff des Anspruchs 1 sowie eine Spritzgießmaschine mit einer Schließeinheit gemäß dem Oberbegriff des Anspruchs 13.

Die Schließeinheit ist ein zentraler Bestandteil einer Spritzgießmaschine. Sie dient dazu, das Formwerkzeug einer Spritzgießmaschine, welches in der Regel aus zwei Formwerkzeughälften mit sich darin befindenden Kavitäten besteht, zu Schließen und zu Öffnen. Zum Schließen des Formwerkzeuges wird dabei in der Regel eine der Formwerkzeughälften in Richtung der anderen Formwerkzeughälfte bewegt bis diese sich berühren und eine gemeinsame Kavität bilden. Anschließend werden die zwei Formwerkzeughälften mittels einer Schließkraft aneinandergedrückt, um ein Abdichten der Kavität zu gewährleisten. Zum Öffnen des Werkzeuges wird eine der Formwerkzeughälften entsprechend von der anderen Formwerkzeughälfte wegbewegt.

Um eine zuverlässige Bewegung und ein zuverlässiges Schließen des Werkzeuges sowie ein zuverlässiges Abdichten der Kavität zu ermöglichen, gibt es im Stand der Technik verschiedene Bauweisen von Schließeinheiten, die grundlegend unterschieden werden müssen. So gibt es zum einen Schließeinheiten mit Säulen, die auch Holme genannt werden. An diesen Säulen sind sogenannte Werkzeugaufspannplatten (WAP) angeordnet. Am weitesten verbreitet sind hier Schließeinheiten mit vier Säulen, bei denen die Werkzeugaufspannplatten im Wesentlichen rechteckig ausgebildet sind und in jeder ihrer vier Ecken eine der vier Säulen angeordnet ist.

Bei Schließeinheiten mit Säulen muss zwischen sogenannten Zweiplatten-Schließeinheiten und Dreiplatten-Schließeinheiten unterschieden werden. Dreiplatten-Schließeinheiten weisen dabei drei Platten auf: Eine feste Werkzeugaufspannplatte (FWAP), eine bewegliche Werkzeugaufspannplatte (BWAP) und eine Abstützplatte. Die Säulen sind bei diesen Ausführungen fest an der Abstützplatte und an der festen Werkzeugaufspannplatte befestigt. Die sich zwischen diesen beiden Platten befindliche bewegliche Werkzeugaufspannplatte ist nicht an den Säulen fixiert und kann somit zwischen der Abstützplatte und der festen Werkzeugaufspannplatte bewegt werden. Bei Zweiplatten-Schließeinheiten ist keine Abstützplatte vorhanden. Bei diesen Ausführungsformen sind die Säulen entweder an der festen Werkzeugaufspannplatte oder an der beweglichen Werkzeugaufspannplatte befestigt und müssen daher nach dem Schließen des Formwerkzeuges in der Regel verriegelt werden, um ein zuverlässiges Abdichten der Kavität des Formwerkzeuges zu ermöglichen.

Neben Schließeinheiten mit Säulen gibt es auch säulenlose Schließeinheiten. Damit eine ausreichende Schließkraft auf das Formwerkzeug aufgebracht werden kann, weisen säulenlose Schließeinheiten in der Regel einen sehr robusten, also massiven Maschinenrahmen auf, der die entsprechenden Kräfte aufnehmen bzw. aufbringen kann. Mögliche Bauweisen sind hier u. a. Schließeinheiten mit C-Rahmen, Schließeinheiten mit H-Rahmen und Schließeinheiten in Schraubstock-Bauweise. Als nachteilig ist bei diesen Schließeinheiten insbesondere der massive Maschinenrahmen, der entsprechend viel Platz einnimmt, anzusehen.

Als mögliche Antriebseinrichtungen für die Bewegung der beweglichen Werkzeugaufspannplatte sind aus dem Stand der Technik sowohl Antriebe linearer Bauart als auch Antriebe nicht linearer Bauart bekannt. Unter Antriebe linearer Bauart fallen z.B. Spindelantriebe, Zahnstangenantriebe und Hydraulikantriebe. Nicht lineare Antriebe sind beispielsweise Kniehebelantriebe und Schubkurbelantriebe.

Aus der DE 2 022 191 ist eine Schließeinheit für eine Kunststoffspritzgießmaschine bekannt, bei der ein sogenannter Drehkolbenantrieb für die Bewegung der beweglichen Werkzeugaufspannplatte verantwortlich ist. Bei der Schließeinheit handelt es sich um eine Dreiplatten-Schließeinheit. Zusätzlich ist bei der hier offenbarten Schließeinheit noch ein Hydraulikzylinder vorgesehen, der einen relativ geringen Hubweg aufweist und im Wesentlichen die Schließkraft auf das Formwerkzeug aufbringt.

Die DE 197 52 132 A1 offenbart eine Vorrichtung zum Öffnen und Schließen einer Stützform, die ebenfalls eine Dreiplatten-Schließeinheit aufweist. Die Bewegung der beweglichen Werkzeugaufspannplatte wird durch einen Schubkurbelantrieb ermöglicht. Der Schubkurbelantrieb befindet sich dabei auf der Abstützplatte der Schließeinheit. Bei der hier offenbarten Schließeinheit ist das Formwerkzeug dann geschlossen, wenn sich die Schubkurbel in ihrer äußeren Totpunktlage befindet, in der sich alle drei Drehpunkte der Schubkurbel auf einer gemeinsamen Gerade befinden, wobei sich Kurbel und Schubstange der Schubkurbel nicht überlagern. Dementsprechend befindet sich das Formwerkzeug in einem geöffneten Zustand, wenn sich die Schubkurbel in ihrer inneren Totpunktlage befindet, in der die drei Drehpunkte der Schubkurbel ebenfalls auf einer gemeinsamen Gerade liegen, wobei sich Kurbel und Schubstange der Schubkurbel überlagern.

Die DE 94 03 353 U1 offenbart eine Spritzgießmaschine mit einer Schließeinheit, die einen Kniehebelmechanismus aufweist und als Dreiplatten-Schließeinheit ausgebildet ist. Der Kniehebelmechanismus wird dabei durch eine schubkurbelähnliche Einrichtung betätigt.

Aus der FR 1 538 163 ist eine Schließeinheit für eine Kunststoffspritzgießmaschine bekannt, bei der die Bewegung der beweglichen Werkzeugaufspannplatte im Wesentlichen durch eine Schubkurbel durch einen Schubkurbelantrieb bewirkt wird. Zusätzlich zu dem Schubkurbelantrieb ist bei dieser Dreiplatten-Schließeinheit ein Hydraulikzylinder vorgesehen, der bei bereits geschlossenem Formwerkzeug die Schließkraft aufbringt. Der Schubkurbelantrieb und der Hydraulikzylinder sind dabei in Reihe geschaltet. Das heißt, dass der Hydraulikzylinder nur über den Schubkurbelantrieb wirkt und nicht direkt mit der beweglichen Werkzeugsaufspannplatte in Verbindung steht.

Aus der DE 1 679 923 und der DE 1 704 064 sind zwei sogenannte Tandem-Kunststoffspritzgießmaschinen bekannt, bei denen jede Aufspannplatte doppelt vorgesehen ist. Der Antrieb zur Bewegung der beweglichen Formwerkzeugaufspannplatte befindet sich dabei im Zentrum der Schließeinheit. Beide Formwerkzeuge jeder der Kunststoffspritzgießmaschinen werden dabei gleichzeitig, d. h. synchron geöffnet bzw. geschlossen. Durch diese Tandemanordnung wird ein spezielles Kräftegleichgewicht erzeugt.

Die US 3,830,614 offenbart eine Schließeinheit für eine Kunststoffspritzgießmaschine, die fünf Aufspannplatten aufweist, von denen die zwei äußeren stationär und die drei inneren in gewissen Grenzen beweglich sind. Durch einen kombinierten Schubkurbel-Kniehebel-Antrieb wird eine der beweglichen Aufspannplatten, auf der sich eine Formwerkzeughälfte befindet, auf die anderen zwei beweglichen Aufspannplatten zu bewegt, wodurch das Formwerkzeug geschlossen wird. Bei dieser Schließeinheit sind zusätzlich mehrere Federn vorgesehen, die entgegen der Schließbewegung des Formwerkzeuges wirken. Auf diese Weise soll ein gleichmäßiger Spritzdruck erzeugt werden.

Eine Spritzgiessmaschine ist aus der DE 101 29 339 A1 bekannt. Eine derartige Spritzgiessmaschine verfügt über einen Antrieb zum Öffnen und Schließen der Werkzeugaufspannplatten, der in nicht linearer Bauart, insbesondere als Schubkurbelantrieb ausgebildet ist. Bei einer derartigen Spritzgiessmaschine ist von Nachteil, dass der Schubkurbelantrieb zwar gut geeignet ist, hohe Schließkräfte durch die Nutzung einer inneren Totpunktlage aufzubringen, jedoch ist das relativ kraftfreie Verfahren der beweglichen Werkzeugaufspannplatte von einer geöffneten Stellung bis hin zur geschlossenen Stellung nicht optimal, da sowohl beim Start aus der geöffneten Position, wie auch beim Start aus der geschlossenen Position das Schubkurbelgetriebe ungünstige Winkel- und Hebelverhältnisse aufweist, was einer maximalen Beschleunigung der beweglichen Werkzeugaufspannplatte entgegenwirkt.

Aus der DE 198 00 820 A1 ist eine Spritzgiessmaschine bekannt, bei der die Schließkraft für die Formwerkzeughälften mittels eines nicht linearen Getriebes aufgebracht wird. Dieses nicht lineare Getriebe weist im Wesentlichen einen L-förmigen Hebel auf, der einendig mit der beweglichen Werkzeugaufspannplatte in Verbindung steht und anderendig mit einem Hydraulikzylinder gekoppelt ist. Des Weiteren ist eine Verbindungsstange an dem L-förmigen Hebel angelenkt, die vom L-förmigen Hebel zu einer hinter der festen Werkzeugaufspannplatte angeordneten Formhöhenverstellung führt und mit dieser gekoppelt ist. Die hydraulischen Schließzylinder werden zum Schließen eines geöffneten Werkzeuges zunächst auf Zug geschaltet. Nach Erreichen einer Zwischentotpunktlage bewegen sich die bis dahin bereits bewegte Werkzeugaufspannplatte und die bereits in Bewegung befindlichen Hebel aufgrund der Trägheit zur Überwindung der Zwischentotpunktlage ein Stück weiter. In diesem Zwischentotpunkt wird der Hydraulikzylinder (Schließzylinder) von Zug auf Druck umgeschaltet und bewirkt ein Weiterbewegen, insbesondere ein wieder angetriebenes Weiterbewegen des L-förmigen Hebels und der beweglichen Werkzeugaufspannplatte. Diese Bewegung erfolgt bis zum Schließen des Werkzeuges. Die Schließkraft des Werkzeuges wird dabei über den L-förmigen Hebel direkt vom Schließzylinder aufgebracht. Die Verbindungsstangen zwischen dem L-förmigen Hebel und der Formhöhenverstellung dienen dabei als Widerlager, wobei die Formhöhenverstellung die volle Schließkraft abstützen muss, wenn das Werkzeug geschlossen ist. Somit handelt es sich bei der offenbarten Spritzgiessmaschine um eine gattungsgemäße Spritzgiessmaschine in Zwei-Platten-Bauart, welche holmlos ausgeführt ist. Der Schließkraftaufbau dieser Maschine erfolgt über eine Antriebseinrichtung nicht linearer Bauart.

Bei einer derartigen Spritzgiessmaschine ist nachteilig, dass zum einen sowohl die Überwindung des Verfahrweges der beweglichen Werkzeugaufspannplatte als auch der Aufbau der Schließkraft von einem einzigen Antrieb bewerkstelligt werden muss. Hieraus resultiert der Nachteil, dass dieser Antrieb nicht optimal auf die Aufbringung der Schließkraft und die möglichst schnelle Überwindung des Schließweges ausgelegt werden kann. Der Antrieb stellt immer einen Kompromiss zwischen beiden Anforderungen dar. Dies schränkt die konstruktiven Möglichkeiten zur Optimierung der Verfahrgeschwindigkeit und somit der Zykluszeit einerseits und zur Optimierung des Schließkraftaufbaus andererseits ein.

Ein weiterer Nachteil ist, dass bei der offenbarten Spritzgiessmaschine die hydraulisch betätigte Formhöhenverstellung bei jedem Spritzgiesszyklus mit der Schließkraft in voller Höhe beaufschlagt wird. Dies bedingt eine überdimensional starke Auslegung der Formhöhenverstellung, was teuer und aufwendig ist. Insbesondere entsteht ein hoher Wartungsaufwand.

Aus der EP 856 391 A1 ist eine Schließeinheit bekannt geworden, welche eine erste und eine zweite Antriebseinrichtung besitzt, wobei die zweite Antriebseinrichtung zumindest einige mechanische Bestandteile der ersten Antriebseinrichtung zur Kraftübertragung nutzt.

Eine gattungsgemäße Schließeinheit mit den Merkmalen des Oberbegriffs des Anspruchs 1 ist aus der JP S61 11214 A und der JP S60 30321 A bekannt. Derartige Schließeinheiten erfordern einen massiven und zur Aufnahme von Schließkraft ausgelegten Maschinenrahmen.

Aufgabe der Erfindung ist es daher, eine alternative Schließeinheit für eine säulenlose Kunststoffspritzgiessmaschine in Zwei-Platten-Bauart bereitzustellen, die oben genannten Nachteile des Standes der Technik vermeidet oder vermindert.

Des Weiteren soll die Schließeinheit besonders kurzbauend sein und hinsichtlich des Schließkraftaufbaus wie auch der Überwindung des Verfahrweges einer beweglichen Werkzeugaufspannplatte optimal auslegbar sein.

Eine weitere Aufgabe der Erfindung ist es, zu verhindern, dass der Kraftfluss beim Aufbau der Schließkraft über den Maschinenrahmen erfolgt oder andere hierfür nicht unbedingt notwendige Bestandteile der Spritzgiessmaschine am Kraftfluss zum Aufbau der Schließkraft beteiligt sind.

Es ist eine weitere Aufgabe der Erfindung, eine Schließeinheit für eine Kunststoffspritzgießmaschine bereitzustellen, die in ihrem Aufbau wesentlich weniger umständlich und weniger kostenintensiv als aus dem Stand der Technik bekannte Schließeinheiten ist.

Diese Aufgaben werden durch eine Schließeinheit gemäß Anspruch 1 sowie durch eine Kunststoffspritzgießmaschine gemäß Anspruch 13 gelöst.

Vorteilhafte Weiterbildungen sind Gegenstand der Unteransprüche.

Eine erfindungsgemäße säulenlose Zwei-Platten-Schließeinheit für eine Kunststoffspritzgiessmaschine mit einer festen Aufspannplatte und einer beweglichen Aufspannplatte weist eine erste Antriebseinrichtung zum Schließkraftaufbau auf, welche nach Art eines nichtlinearen Getriebes aufgebaut ist. Eine solche Schließeinheit ist erfindungsgemäß weitergebildet dadurch, dass zumindest eine zweite Antriebseinrichtung zum Verfahren der beweglichen Aufspannplatte relativ zur festen Aufspannplatte vorhanden ist, wobei die Relativbewegung entlang eines Verfahrweges im Wesentlichen von der zumindest einen zweiten Antriebseinrichtung bewirkbar ist. Dabei ist die zumindest eine zweite Antriebseinrichtung parallel zur ersten Antriebseinrichtung angeordnet, d. h. unabhängig von mechanischen Bestandteilen der ersten Antriebseinrichtung mit der festen und beweglichen Werkzeugaufspannplatte zusammenwirkend angeordnet. Dabei bedeutet "parallel" im Sinne der Erfindung, dass die erste Antriebseinrichtung und die zweite Antriebseinrichtung voneinander unabhängig arbeiten können. Sowohl die erste Antriebseinrichtung als auch die zweite Antriebseinrichtung sind grundsätzlich jeweils für sich alleine geeignet, die bewegliche und die feste Aufspannplatte relativ zueinander zu bewegen. Denkt man sich eine der Antriebseinrichtungen mit all ihren Antriebselementen und Antriebsgliedern weg, so könnte theoretisch eine Bewegung der beiden Aufspannplatten aufeinander zu oder voneinander weg durch die jeweils andere Antriebseinrichtung erfolgen. Somit ist erfindungsgemäß kein Antriebselement, wie z. B. ein Lenker eine Kurbel oder dergleichen vorgesehen, welches sowohl zur ersten Antriebseinrichtung als auch zur zweiten Antriebseinrichtung gehört und für deren Funktion notwendig ist.

Erfindungsgemäß kommt es wesentlich darauf an, dass die erste Antriebseinrichtung als nicht lineare Antriebseinrichtung ausgebildet ist und hinsichtlich ihrer konstruktiven Auslegung auf die Aufbringung der Schließkraft optimiert ist. Die zweiten Antriebseinrichtungen sind hinsichtlich ihrer Auslegung nicht für den Schließkraftaufbau geeignet, sondern vielmehr für optimale Beschleunigung und das optimale Verfahren der beweglichen Aufspannplatte während des nahezu lastfreien, d. h. bis auf Trägheits- und Reibungskräfte lastfreien Verfahrens der beweglichen Werkzeugaufspannplatte ausgelegt. Durch die erfindungsgemäße Trennung der ersten Antriebseinrichtungen und der zweiten Antriebseinrichtungen, was im Folgenden als "Parallelschaltung" bezeichnet wird, gelingt es, jede der beiden Antriebseinrichtungen optimal auf deren Hauptaufgabe auszulegen und zu konstruieren. Erfindungsgemäß wird hierbei bewusst der umgekehrte Weg eines allgemeinen fachmännischen Bestrebens hin zur Funktionsintegration gegangen.

Selbstverständlich ist es bei einer reinen Parallelschaltung zweier Antriebseinrichtungen unterschiedlicher oder gleicher Bauart physikalisch nahezu unmöglich, die eine Antriebseinrichtung vor Einwirkungen der anderen Antriebseinrichtung 100%-ig abzuschirmen. So kann es beispielsweise sein, dass beim Verfahren der beweglichen Aufspannplatte im Schnellgang durch die zweite Antriebseinrichtung selbstverständlich Kräfte in die Lenker der ersten Antriebseinrichtung eingeleitet werden können. Auch umgekehrt ist dies möglich, d. h. wenn die erste Antriebseinrichtung gerade ihre Aufgabe erfüllt und für den Schließkraftaufbau sorgt, so muss selbstverständlich die zweite Antriebseinrichtung mitbewegt werden bzw. erfährt eventuelle Reaktionskräfte aus dem Antrieb der ersten Antriebseinrichtung.

Vor diesem Hintergrund sind die Formulierungen "im Wesentlichen" zu verstehen. Dies bedeutet nichts anderes, als dass die erste Antriebseinrichtung nicht linearer Bauart hinsichtlich ihrer überwiegenden Hauptaufgabe und ihrer Auslegung für den Schließkraftaufbau zuständig ist und die zweiten Antriebseinrichtungen hinsichtlich ihrer Bauart, ihrer Konstruktion und ihrer Auslegung optimal auf das Verfahren der beweglichen Aufspannplatte zum Schließen und Öffnen des Werkzeuges ausgelegt sind.

Bei der erfindungsgemäßen säulenlosen Zwei-Platten-Schließeinheit ist von Vorteil, dass zum einen die innere Totpunktlage einer nichtlinearen ersten Antriebseinrichtung für die Aufbringung der Schließkraft genutzt wird und andererseits eine hiervon getrennte parallele zweite Antriebseinrichtung vorhanden ist, die zur Erreichung optimaler Öffnungs- und Schließzeiten auf das Verfahren (Beschleunigen und Abbremsen) der Zwei-Platten-Schließeinheit ausgelegt ist.

Gemäß einer bevorzugten Ausführungsform ist die erste Antriebseinrichtung als Schubkurbelantrieb ausgebildet, der in der Schließstellung der Spritzgiessmaschine in einer inneren Totpunktlage vorliegt. Hierdurch ist eine insbesondere kompakte Bauweise der Kunststoffspritzgiessmaschine erreichbar.

Des Weiteren benötigt ein Schubkurbelantrieb lediglich wenige bewegte Bauteile (im Allgemeinen eine Kurbel und einen Lenker), so dass der konstruktive Aufbau relativ einfach ist. Weiterhin liegen nur wenige Bauteile vor, die bei geschlossenem Werkzeug, wenn Schließkraft aufgebracht ist, der hohen Schließkraft widerstehen müssen und am Kraftfluss für den Schließkraftaufbau beteiligt sind.

Die zumindest eine zweite Antriebseinrichtung kann sowohl linearer Bauart als auch nicht linearer Bauart sein, wobei als linear arbeitende zweite Antriebseinrichtung insbesondere ein Spindelantrieb und/oder Zahnstangenantrieb und/oder ein linearer Hydraulikantrieb in Frage kommt. Bei der Ausgestaltung der zweiten Antriebseinrichtung in nicht linearer Bauart kann insbesondere ein Schubkurbelantrieb oder ein Kniehebel zweckmäßig sein.

Egal in welcher Bauart die zweite Antriebseinrichtung ausgeführt ist, ist es jedoch erfindungsgemäß, die zumindest eine zweite Antriebseinrichtung hinsichtlich optimaler Beschleunigung und optimaler Abbremsung sowie - allgemein gesagt - dem optimalen Verfahren der beweglichen Aufspannplatte relativ zur festen Werkzeugaufspannplatte auszulegen.

Die erste Antriebseinrichtung, die in der Art eines nicht linearen Antriebs ausgebildet ist, ist auf das Aufbringen hoher Schließkräfte hin optimiert.

Für den Fall, dass die zumindest eine zweite Antriebseinrichtung als nicht lineare Antriebseinrichtung ausgebildet ist, empfiehlt es sich, diese zweite Antriebseinrichtung relativ zur ersten Antriebseinrichtung phasenverschoben anzuordnen, um hierdurch ein optimales Beschleunigungsverhalten beim Öffnen und Schließen der Aufspannplatten und damit kurze Öffnungs- und Schließzeiten zu erreichen, was vorteilhafte Auswirkungen auf die Gesamtzykluszeit hat.

Eine zweckmäßige Möglichkeit der phasenverschobenen Anordnung der zumindest einen zweiten Antriebseinrichtung gegenüber der ersten Antriebseinrichtung ist es, dass unmittelbar nach dem Öffnen des Werkzeuges, bei dem sich die erste Antriebseinrichtung näherungsweise in der inneren Totpunktlage befindet, die zweite Antriebseinrichtung in einer Stellung befindet, in der eine Betätigung der zweiten Antriebseinrichtung zu einer maximalen Wegänderung der beweglichen Werkzeugaufspannplatte relativ zur feste Aufspannplatte bewirkt.

Hierbei kommen Phasenverschiebungswinkel ϕ zwischen 70° und 110°, insbesondere zwischen 80° und 100° besonders in Betracht.

Hinsichtlich weiterer Ausgestaltungen kann es sinnvoll sein, jeweils einen Antrieb der ersten Antriebseinrichtung und/oder einen Antrieb der zumindest einen zweiten Antriebseinrichtung an der festen Aufspannplatte anzuordnen. Gleichwertig hierzu ist die Anordnung der Antriebe am Maschinengestell. Hierbei ist es vorteilhaft, dass die Antriebe der Antriebseinrichtungen, z. B. Motoren oder hydraulische Antriebe oder dergleichen nicht mit der beweglichen Werkzeugaufspannplatte mitbewegt werden und somit maschinengestellfest angeordnet sind, wobei es dann nicht notwendig ist, Zuleitungen, z. B. elektrische oder hydraulische Zuleitungen zu den Antrieben beweglich relativ zum Maschinengestell auszubilden.

Gleichwohl kann es aber auch Bauformen der Spritzgießmaschine geben, in denen es sinnvoll ist, die Antriebe der Antriebseinrichtung und/oder die Antriebe der zumindest einen zweiten Antriebseinrichtung an der beweglichen Werkzeugaufspannplatte anzuordnen. Diese Maßnahme ist insbesondere dann sinnvoll, wenn an der festen Werkzeugaufspannplatte relativ große, raumgreifende Spritzgiessaggregate (Plastifizierschnecken) vorgesehen sind. In einem solchen Fall wird durch die Anordnung der Antriebe an der beweglichen Werkzeugaufspannplatte im Bereich des Spritzaggregates Bauraum freigehalten.

Um in einer erfindungsgemäßen Spritzgiessmaschine Werkzeuge unterschiedlicher Geometrien einsetzbar machen zu können, empfiehlt es sich eine Einrichtung zur Anpassung der ersten Antriebseinrichtung und/oder der zweiten Antriebeinrichtung an unterschiedliche Formhöhen einzusetzen.

Ebenso zur Erfindung gehört eine Spritzgiessmaschine, welche eine Schließeinheit gemäß der Erfindung aufweist.

Im Folgenden wird die Erfindung anhand der Zeichnung beispielhaft näher erläutert. Es zeigen:
- Figur 1a:: schematisch den Aufbau einer Ausführungsform der erfindungsgemäßen Schließeinheit, wobei sich das Formwerkzeug in einem geöffneten Zustand befindet;
- Figur 1b:: schematisch die Ausführungsform der erfindungsgemäßen Schließeinheit gemäß Figur 1a, wobei sich da Formwerkzeug in einem geschlossenen Zustand befindet;
- Figur 2a:: schematisch den Aufbau einer weiteren Ausführungsform der erfindungsgemäßen Schließeinheit, wobei sich das Formwerkzeug in einem geöffneten Zustand befindet;
- Figur 2b:: schematisch die Ausführungsform der erfindungsgemäßen Schließeinheit gemäß Figur 2a, wobei sich das Formwerkzeug in einem geschlossenen Zustand befindet;
- Figur 3:: schematisch den grundsätzlichen Aufbau eines Schubkurbelantriebs;
- Figur 4a:: schematisch und nicht maßgetreu eine Seitenansicht auf eine erfindungsgemäße Schließeinheit, wobei die zweite Antriebseinrichtung als Spindelantrieb ausgebildet ist (erste Antriebseinrichtung ist nicht dargstellt),
- Figur 4b:: schematisch und nicht maßgetreu eine Seitenansicht auf eine erfindungsgemäße Schließeinheit, wobei die zweite Antriebseinrichtung als Schubkurbelantrieb ausgebildet ist (erste Antriebseinrichtung ist nicht dargestellt);
- Figur 5:: schematisch eine Seitenansicht auf eine erfindungsgemäße Schließeinheit mit einer ersten und einer zweiten Antriebseinrichtung, die jeweils nicht linearer Bauart sind und die zweite Antriebseinrichtung insbesondere als Schubkurbelantrieb ausgebildet ist und phasenverschoben zur ersten Antriebseinrichtung angeordnet ist;
- Figur 6:: eine Ausführungsform der erfindungsgemäßen Schließeinheit in geöffneter Werkzeugstellung mit linear wirkenden Hydraulikzylindern als zweite Antriebseinrichtung in einer isometrischen Ansicht;
- Figur 7a:: die Schließeinheit gemäß Figur 6 in einer perspektivischen Darstellung bei geschlossenem Werkzeug und
- Figur 7b:: die erfindungsgemäße Schließeinheit gemäß Figur 7a in einer Seitenansicht.

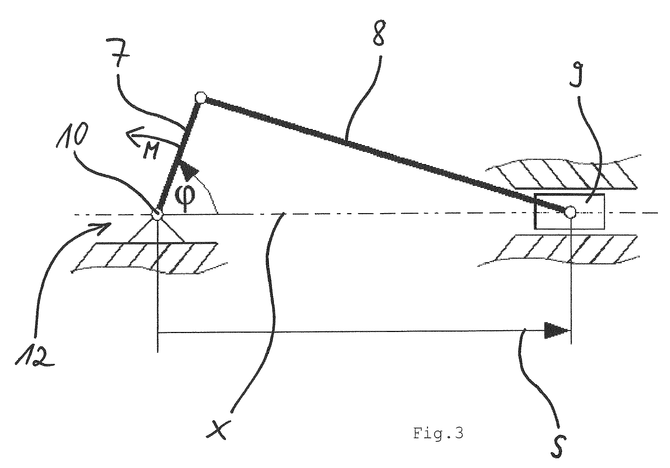

In der Figur 3 ist der grundsätzliche Aufbau eines Schubkurbelantriebs dargestellt. Die Schubkurbel besteht dabei aus einer Kurbel 7, einer Schubstange 8 und einem Abtriebselement 9. Die Kurbel 7 ist an ihren einem Ende drehbar an einem Fixpunkt 10 gelagert. An ihrem anderen Ende ist die Kurbel 7 mit der Schubstange 8 verbunden, wobei auch diese zwei Elemente drehbar zu einander sind. Am anderen Ende der Schubstange 8 ist diese mit dem Abtriebselement 9 ebenfalls drehbar verbunden. Das Abtriebselement 9 ist linear geführt, so dass sich das Abtriebselement 9 lediglich in oder entgegen der Richtung entlang einer Achse x bewegen kann. Die Achse x geht bei einem idealen Schubkurbelantrieb sowohl durch den Drehpunkt zwischen Kurbel 7 und Fixpunkt 10 als auch durch den Drehpunkt zwischen Schubstange 8 und Abtriebselement 9 geht. In der Praxis kann jedoch die Achse x der Führung des Abtriebselements 9 auch von der Verbindungslinie der Gelenkpunkte abweichen oder sogar schräg zu der Verbindungslinie verlaufen. Der Winkel ϕ bezeichnet den Drehwinkel der Kurbel 7 relativ zu der Achse x. Wird die Kurbel 7 nun, angetrieben durch ein Drehmoment M eines Motors 12, um den Fixpunkt 10 gedreht, so verändert sich der Winkel ϕ und das Abtriebselement 9 vollzieht eine Bewegung entlang der Achse x. Die Strecke s zwischen dem Fixpunkt 10 und dem Abtriebselement 9 verändert sich dabei entsprechend. Der Weg zwischen den beiden Extrempunkten des Abtriebselements 9 entspricht dem maximalen Verfahrweg des Abtriebselements 9.

Befinden sich alle drei Drehpunkte auf der Achse x, so befindet sich der Schubkurbelantrieb in einer Totpunktlage. Überlagern sich dabei die Kurbel 7 und die Schubstange 8, so spricht man von einer inneren Totpunktlage; der zweite Fall wird als äußere Totpunktlage bezeichnet. In der äußeren Totpunktlage ist die Strecke s maximal, in der inneren Totpunktlage ist die Strecke s minimal.

Bei kontinuierlichem Drehmoment M weist der Schubkurbelantrieb in den Bereichen der Totpunktlagen die geringste Verfahrgeschwindigkeit auf, wobei hier die Geschwindigkeit des Abtriebselements 9 gemeint ist. In diesen Bereichen ist jedoch die von dem Abtriebselement 9 ausgeübte Kraft in Richtung der Achse x am größten. Dies wird durch die Erfindung genutzt.

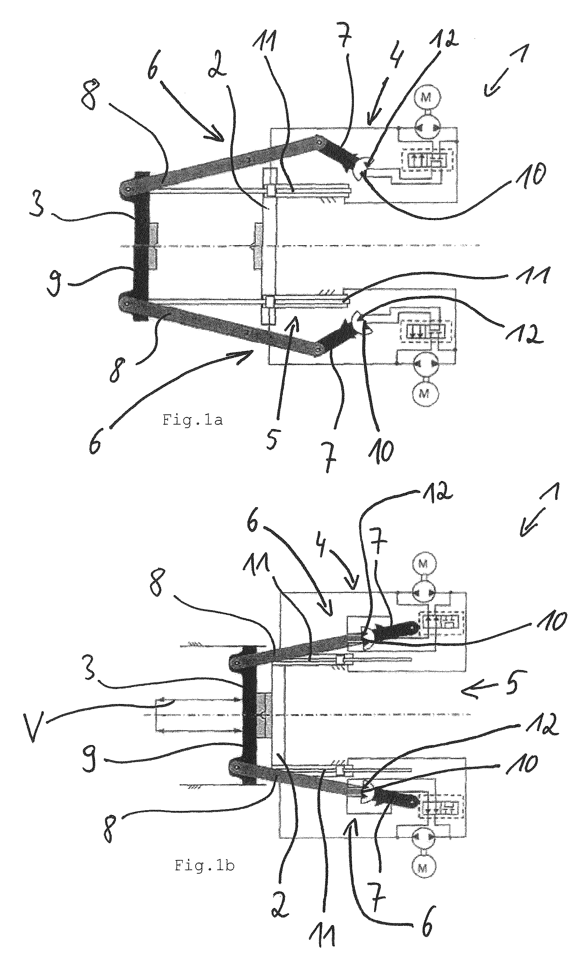

Die Figur 1a zeigt eine Ausführungsform der erfindungsgemäßen Schließeinheit 1 mit einer festen Aufspannplatte 2 und einer beweglichen Aufspannplatte 3. Auf der festen Aufspannplatte 2 und/oder auf einem mit dieser verbundenen Maschinenrahmen ist eine erste Antriebseinrichtung 4 angeordnet, die aus zwei Antriebselementen erster Art 6 in Form von Schubkurbelantrieben besteht. Jedes der Antriebselemente erster Art 6 weist eine Kurbel 7 auf, die drehbar an der festen Aufspannplatte 2 befestigt ist. Die Kurbeln 7 werden jeweils durch einen, nicht näher dargestellten, Motor 12 angetrieben. An die Kurbel 7 schließt sich eine Schubstange 8 an, die drehbar an der beweglichen Aufspannplatte 3 befestigt ist. Im vorliegenden Fall dient die bewegliche Aufspannplatte 3 somit als Abtriebselement 9 des Schubkurbelantriebs. Durch eine Drehung der Kurbel 7 erfolgt ein Schließen des Formwerkzeugs durch aufeinander zu bewegen von fester Aufspannplatte 2 und beweglicher Aufspannplatte 3.

Die Schließeinheit 1 weist zusätzlich eine zweite Antriebseinrichtung 5 auf, die aus zwei Antriebselementen zweiter Art 11 gebildet wird. Die Antriebselemente zweiter Art 11 sind dabei Hydraulikzylinder.

Bei bestimmungsgemäßem Gebrauch wird die zweite Antriebseinrichtung 5 so angesteuert, dass sie eine Bewegung der beweglichen Aufspannplatte 3 auf die feste Aufspannplatte 2 zu bewirkt. Zusätzlich wird die Kurbel 7 der ersten Antriebseinrichtung 4 gedreht, bis sich der Schubkurbelantrieb in der inneren Totpunktlage befindet. Die bewegliche Aufspannplatte 3 legt dabei einen Verfahrweg V zurück. In diesem geschlossenen Zustand wird durch den Schubkurbelantrieb eine hohe Schließkraft auf das Formwerkzeug ausgeübt, wodurch sichergestellt ist, dass eine in dem Formwerkzeug gebildete Kavität abgedichtet wird. Die Figur 1b zeigt diesen Zustand.

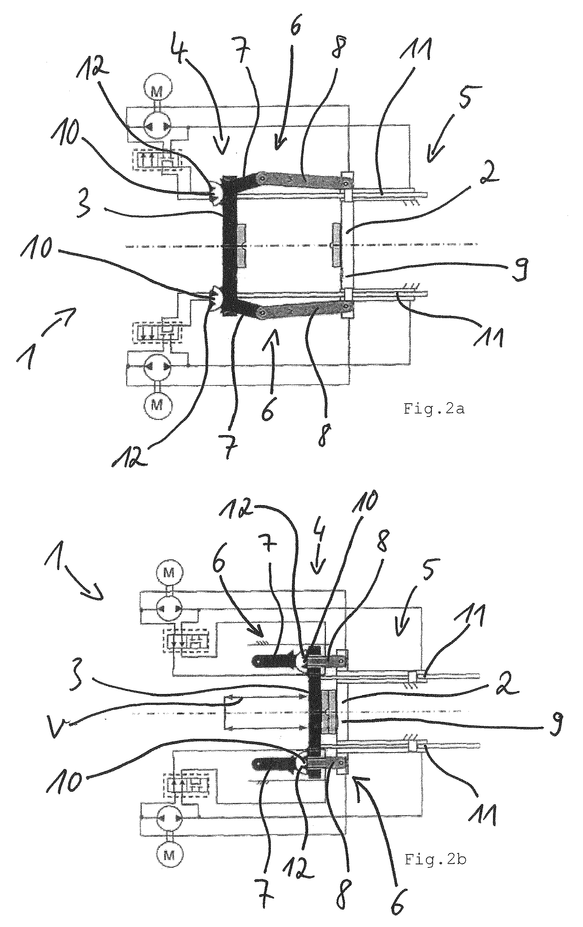

Die Figuren 2a und 2b zeigen eine weitere Ausführungsform der erfindungsgemäßen Schließeinheit 1. Der wesentliche Unterschied zu der Ausführungsform der Figuren 1a und 1b besteht darin, dass die erste Antriebseinrichtung 4 mit ihren Antriebselementen erster Art 6 und insbesondere der Motor 12 an der beweglichen Aufspannplatte 3 der Schließeinheit 1 angeordnet ist. Die erste Antriebseinrichtung 4 bewegt sich daher beim Schließen des Formwerkzeugs zusammen mit der beweglichen Aufspannplatte 3. Der Vorteil dieser Ausführungsform ist durch den Vergleich mit der Ausführungsform der Figuren 1a und 1b deutlich sichtbar; die Ausführungsform der Figuren 2a und 2b ist noch kurzbauender und somit sehr kompakt. Die Länge der Schließeinheit 1 entlang der Schließrichtung des Formwerkzeugs ist vor allem von der Summe der Längen der Kurbel 7 und der Schubstange 8 abhängig. Daher ist diese Ausführungsform mit einer relativ kurzen Schubstange 8 hinsichtlich der Kompaktheit als besonders vorteilhaft anzusehen.

Eine weitere Besonderheit der Ausführungsform gemäß den Figuren 2a und 2b, die sich durch die Anordnung der ersten Antriebseinrichtung 4 ergibt, besteht darin, dass bei dieser Ausführungsform die feste Aufspannplatte 2 das Abtriebselement 9 darstellt, da die Schubstange 8 an der festen Aufspannplatte 2 befestigt ist. Da das Abtriebselement 9 somit räumlich fixiert ist, die erste Antriebseinrichtung 4 jedoch eine Relativbewegung zwischen Fixpunkt 10 und Abtriebselement 9 erzwingt, bewegt sich die bewegliche Aufspannplatte 3 auf die feste Aufspannplatte 2 zu, wenn die Kurbel 7 angetrieben wird.

Die Figur 2a zeigt den geöffneten Zustand dieser Ausführungsform der erfindungsgemäßen Schließeinheit während die Figur 2b den geschlossenen Zustand darstellt. Auch bei dieser Ausführungsform ist eine zweite Antriebseinrichtung 5 vorgesehen, die an der festen Aufspannplatte 2 angeordnet ist und direkt mit der beweglichen Aufspannplatte 3 zusammenwirkt.

Den Ausführungen gemäß Figuren 1a bis 2b ist gemeinsam, dass die erste Antriebseinrichtung 4 und die zweiten Antriebseinrichtungen 5 jeweils echt parallel angeordnet sind. Das bedeutet, dass alle mechanischen Bestandteile der ersten Antriebseinrichtung 4, insbesondere die Kurbel 7 und die Kolbenstange 8 nur den ersten Antriebseinrichtungen 4 zugeordnet sind. Die zweiten Antriebseinrichtungen 5 nutzen keine dieser mechanischen Bestandteile der ersten Antriebseinrichtungen 4. Denkt man sich in einer theoretischen Überlegung eine Antriebseinrichtung 4 oder 5, also beispielsweise der ersten Antriebseinrichtungen 4 mit allen ihren mechanischen Bestandteilen (Motor 12, Kurbel 7 und Kolbenstange 8) weg, so ist es immer noch möglich, die bewegliche Aufspannplatte 3 relativ zur festen Aufspannplatte 2 mittels den zweiten Antriebseinrichtungen 5 zu bewegen. Umgekehrt gilt dies genauso für den Fall, dass die zweiten Antriebseinrichtungen 5, beispielsweise die Hydraulikzylinder 11 weggedacht sind. In diesem Fall können die Aufspannplatten 2 und 3 zu einander immer noch mit der ersten Antriebseinrichtung 4 bewegt werden. Vorgenannte Bemerkungen sollen zur Erläuterung dienen, was erfindungsgemäß unter "parallel geschaltet" und "unabhängig voneinander betreibbar" im Zusammenhang mit den Antriebseinrichtungen 4 und 5 zu verstehen ist. Selbstverständlich ist es bei einer erfindungsgemäßen Spritzgussmaschine nicht vorgesehen, diese im bestimmungsgemäßen Betrieb ohne die ersten oder ohne die zweiten Antriebseinrichtungen 4, 5 zu betreiben. Vielmehr ist es gemäß der Erfindung selbstverständlich gewollt, dass beide Antriebseinrichtungen arbeiten, wobei die zweiten Antriebseinrichtungen 5 erfindungsgemäß für ein schnelles Verfahren der beiden Aufspannplatten 2 und 3 zueinander optimiert ausgelegt sind, wohingegen die ersten Antriebseinrichtungen 4 beim Öffnen und Schließen der Aufspannplatten 2 und 3 z. B. lediglich mitgeschleppt werden und deren eigentliche Antriebswirkung erst zum Schließkraftaufbau zum Tragen kommt.

Bei beiden Ausführungsformen wird durch die gleichmäßige Verteilung der Antriebselemente erster Art 6 und der Antriebselemente zweiter Art 11 eine gleichmäßige Krafteinwirkung realisiert, was dazu führt, dass, obwohl es sich bei der erfindungsgemäßen Schließeinheit 1 um eine säulenlose Schließeinheit handelt, kein massiver Maschinenrahmen vorgesehen werden muss.

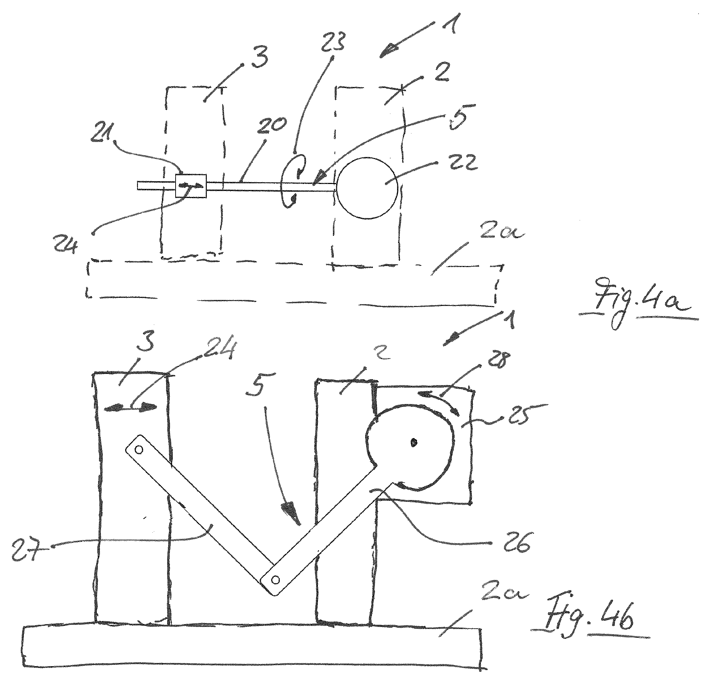

In den Figuren 4a, 4b sind schematisch lediglich die Aufspannplatten 2 und 3 gezeigt, welche mit einer zweiten Antriebseinrichtung 5 miteinander gekoppelt sind. Die feste Aufspannplatte 2 ist ortsfest bezüglich eines Maschinengestells 2a angeordnet. Die bewegliche Aufspannplatte 3 ist bezüglich des Maschinengestells 2a entlang einer Doppelpfeilrichtung 24 verschieblich gelagert. Die zweite Antriebseinrichtung 5 ist in diesem Fall als Spindelantrieb mit einer Spindel 20 und einer Spindelmutter 21 sowie einem Antriebsmotor 22 gekoppelt. Der Antriebsmotor 22 ist in der Lage, die Spindel 20 in Doppelpfeilrichtung 23 anzutreiben. Ein derartiger Antrieb der Spindel 20 bewirkt eine Hin- und Herbewegung (Öffnen und Schließen) der beweglichen Aufspannplatte 3 entlang der Doppelpfeilrichtung 24 (Öffnungs- und Schließrichtung) auf die feste Aufspannplatte zu oder von dieser weg. Die ersten Antriebseinrichtungen 4 sind in Figur 4 nicht dargestellt.

Bei der zweiten Antriebseinrichtung 5 gemäß der Ausführungsform von Figur 4a handelt es sich um eine zweite Antriebseinrichtung 5 in linearer Bauart.

Bei der Ausführungsform gemäß Figur 4b ist die zweite Antriebseinrichtung 5 beispielhaft in einer Ausführungsform in nicht linearer Bauart, insbesondere als Schubkurbelantrieb dargestellt. Ein Motor 25, der als eigenständiger Antrieb für die zweite Antriebseinrichtung 5 fungiert, ist beispielsweise an der festen Aufspannplatte 2 befestigt.

Des Weiteren besitzt die zweite Antriebseinrichtung 5 bei der Ausführungsform gemäß Figur 4b eine Kurbel 26 sowie einen Lenker / eine Schubstange 27. Wie bei der Ausführungsform gemäß Figur 4a ist in der Ausführungsform gemäß Figur 4b die erste Antriebseinrichtung 4 zum Aufbau der Schließkraft nicht dargestellt.

Bei einer Drehung der Kurbel 26 in der Doppelpfeilrichtung 28 bewirkt die zweiten Antriebseinrichtung 5 gemäß Figur 4b ein Verfahren der beweglichen Aufspannplatte 3 entlang der Doppelpfeilrichtung 24 (Öffnungs-/Schließrichtung).

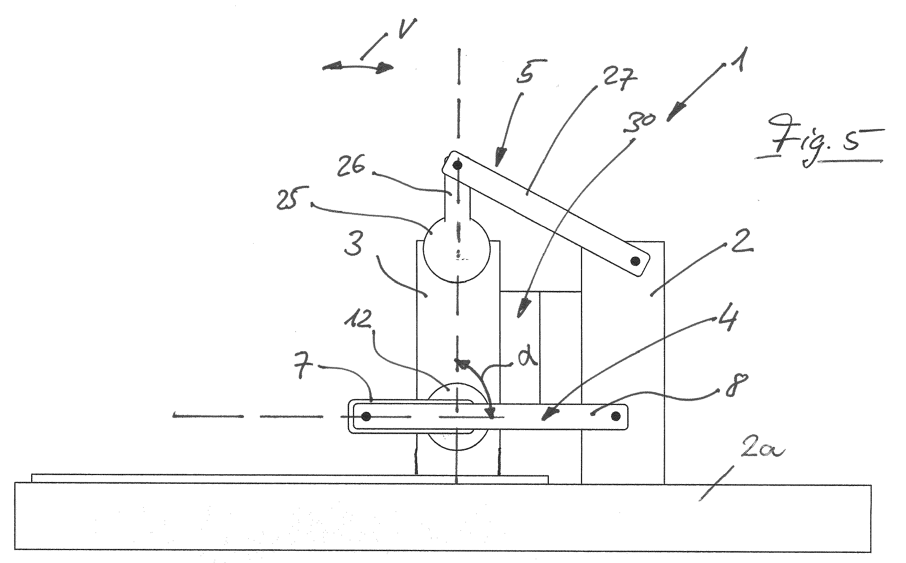

In Figur 5 ist schematisch eine erfindungsgemäße Schließeinheit 1 dargestellt, bei der die erste Antriebseinrichtung 4, die zum Schließkraftaufbau vorgesehen ist, als Schubkurbelgetriebe mit der Schubstange 8, der Kurbel 7 und einem Motor 12 ausgebildet ist. In der Darstellung gemäß Figur 5 befindet sich die Schließeinheit 1 in der geschlossenen Stellung der Aufspannplatten 2 und 3. Die erste Antriebseinrichtung 4 befindet sich in der inneren Totpunktlage, so dass ein Formwerkzeug 30 mit der erforderlichen Schließkraft beaufschlagt wird. Die zweite Antriebseinrichtung 5 der Schließeinheit 1 gemäß Figur 5 ist in nicht linearer Bauart, ebenfalls als Schubkurbelgetriebe mit der Kurbel 26, den Motor 25 und der Schubstange 27 ausgebildet. Beide Motoren 25, 12 sind dabei beispielsweise auf der beweglichen Aufspannplatte 3 angeordnet. Des Weiteren schließen die Kurbeln 26 und 7 der zweiten und der ersten Antriebseinrichtung 5, 4 bei der Ausführungsform gemäß Figur 5 in einer Seitenansicht den Winkel α ein. Dieser Winkel α ist ein Maß für den Phasenversatz der beiden Antriebseinrichtungen 4, 5 zueinander. Der Phasenversatz der beiden Antriebseinrichtungen 4, 5 zueinander beträgt in der Ausführungsform gemäß Figur 5 90°. Dies hat den Vorteil, dass nach dem Öffnen des Werkzeuges 30, d. h. unmittelbar nach dem Abbau der Schließkraft mittels der zweiten Antriebseinrichtung 5 die sich in dieser Stellung hinsichtlich des Verfahrweges V in maximaler Übersetzungsstellung befindet, die bewegliche Aufspannplatte 3 schnell beschleunigen lässt und somit die in dieser Stellung ungünstigen Hebelverhältnisse der ersten Antriebseinrichtung kompensiert werden können. Selbstverständlich muss bei einer derartig phasenverschobenen Anordnung der Winkel α nicht immer genau 90° betragen. Vielmehr hat sich ein Winkelbereich von 70° bis 110°, insbesondere 80° bis 100° besonders bewährt. Im Übrigen kann der Phasenversatz konstruktiv in weiten Grenzen an die Erfordernisse der jeweiligen Schließeinheit 1 bzw. der jeweiligen Spritzgiessmaschine aufweisend die Schließeinheit 1 angepasst werden.

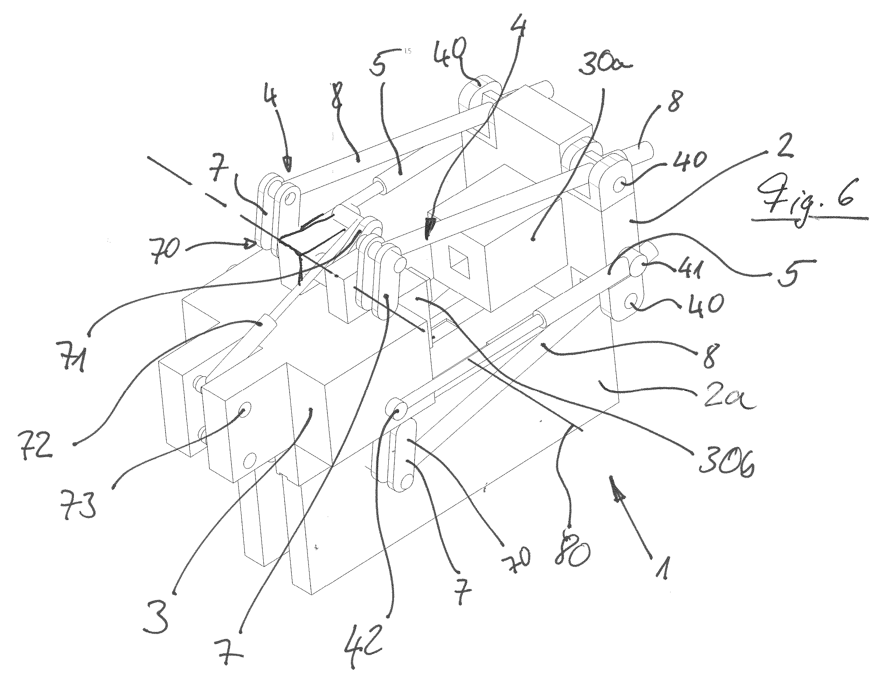

In der Figur 6 ist eine detailliertere Darstellung einer erfindungsgemäßen Schließeinheit 1 dargestellt. Die dort gezeigte Schließeinheit 1 besitzt insgesamt vier erste Antriebseinrichtungen 4 mit Schubstangen 8, welche einendig jeweils in einem Gelenklager 40 mit der festen Aufspannplatte 2 verbunden sind. Die feste Aufspannplatte 2 trägt eine erste Werkzeughälfte 30a. Des Weiteren besitzt die erfindungsgemäße Schließeinheit 1 gemäß der Figur 6 zwei zweite Antriebseinrichtungen 5, die einendig in einem Gelenklager 41 mit der festen Aufspannplatte 2 verbunden sind. Die zweiten Antriebseinrichtungen 5 sind dabei als Hydraulikzylinder ausgebildet. Anderendig sind die Antriebseinrichtungen 5 in jeweils in einen Gelenklager 42 mit der beweglichen Aufspannplatte 3 gekoppelt. Die Schubstangen 8 sind mit Kurbeln 7 der ersten Antriebseinrichtung 4 verbunden. Jeweils oberhalb der beweglichen Aufspannplatte 3 und unterhalb der beweglichen Aufspannplatte 3 ist eine Kurbelwelle 70 vorgesehen, welche jeweils zwei der Kurbeln 7 für zwei erste Antriebseinrichtungen 4 trägt.

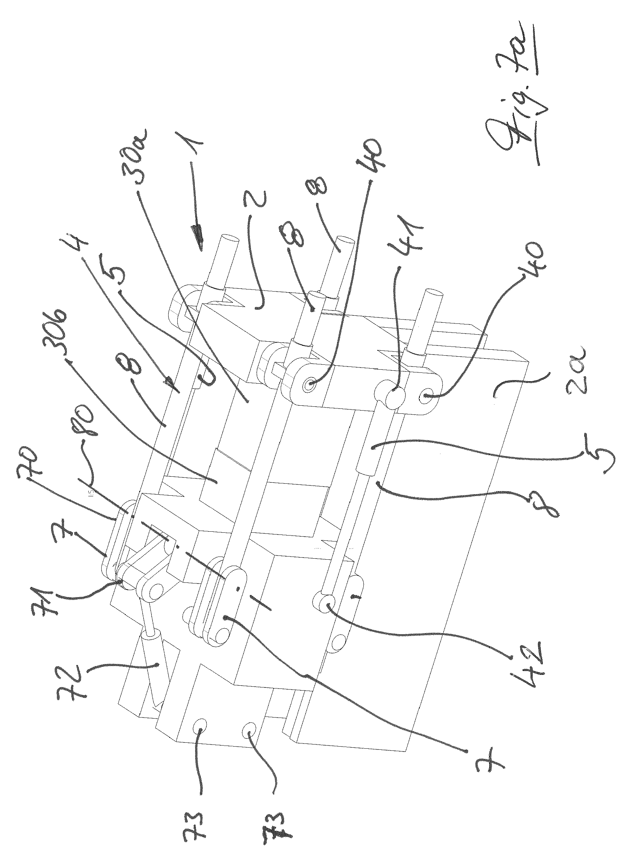

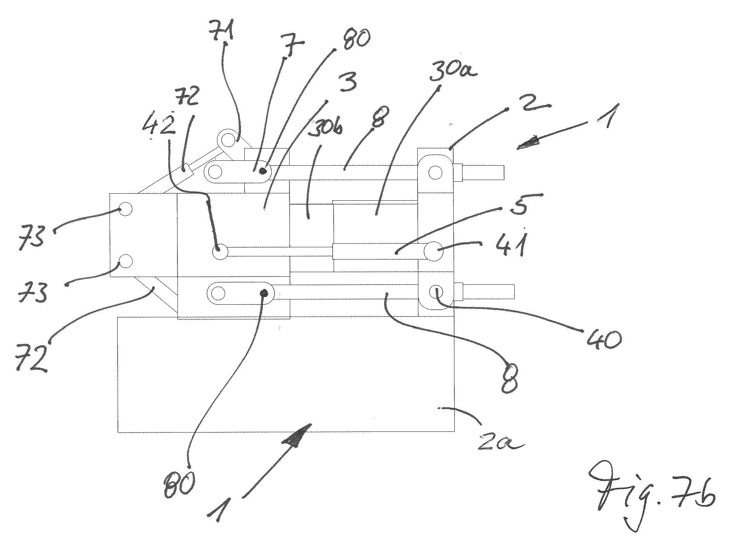

Die Kurbelwelle 70 ist um einen Kurbelwellenachse 80 bezüglich der beweglichen Aufspannplatte 3 schwenkbar gelagert. Zur Veranschaulichung der hohen Kompaktheit der erfindungsgemäßen Schließeinheit 1 ist in Figur 7b eine Seitenansicht auf eine solche erfindungsgemäße Schließeinheit 1 in geschlossenem Zustand dargestellt. Die in Figur 7b dargestellten Bezugszeichen entsprechen identisch denen, die im Zusammenhang mit den Figuren 6 und 7a bereits beschrieben wurden.

Die Kurbelwelle 70 weist zwischen den Kurbeln 7 eine weitere Kurbel 71 auf. An der Kurbel 71 ist ein Antrieb in Form eines Hydraulikzylinders 72 angelenkt, der an seinem freien Ende in einem Gelenklager 73 mit der beweglichen Aufspannplatte 3 verbunden ist. Der Hydraulikzylinder 72 ist somit über die Kurbelwelle 70 gemeinsamer Antrieb für zwei Kurbeln 7 zweier erster Antriebseinrichtungen 4. Die unterseitige Kurbelwelle 70 ist identisch aufgebaut und ist mittels eines zweiten Hydraulikzylinders, der in der Figur 6 verdeckt ist, antreibbar. Die Schließeinrichtung 1 gemäß Figur 6 ist in einer offenen Stellung gezeigt, da die erste Werkzeughälfte 30a und eine zweite Werkzeughälfte 30b, die an der beweglichen Aufspannplatte 3 angeordnet ist, zueinander einen Abstand aufweisen. Aus dieser Stellung wir die erfindungsgemäße Schließeinheit 1 zunächst mittels den zweiten Antriebseinrichtungen 5 in eine Schließstellung gefahren. Sobald sich die Werkzeughälften 30a, 30b berühren, beginnt der Schließkraftaufbau mittels der ersten Antriebseinrichtungen 4. Eine solche geschlossene Stellung ist in Figur 7a dargestellt, bei der sich die ersten Antriebseinrichtungen 4 in der inneren Totpunktlage befinden, was dem maximalen Schließkraftaufbau entspricht.

### Bezugszeichenliste

- 1: Schließeinheit
- 2: feste Aufspannplatte
- 2a: Maschinengestell
- 3: bewegliche Aufspannplatte
- 4: erste Antriebseinrichtung
- 5: zweite Antriebseinrichtung
- 6: Antriebselement erster Art
- 7: Kurbel
- 8: Schubstange
- 9: Abtriebselement
- 10: Fixpunkt
- 11: Hydraulikzylinder
- 12: Motor
- 20: Spindel
- 21: Spindelmutter
- 22: Antriebsmotor
- 23: Doppelpfeilrichtung
- 24: Doppelpfeilrichtung (Öffnungs-/Schließrichtung)
- 25: Motor
- 26: Kurbel
- 27: Lenker/Schubstange
- 28: Doppelpfeilrichtung
- 30: Werkzeug
- 30a: erste Werkzeughälfte
- 30b: zweite Werkzeughälfte
- 40: Gelenklager
- 41: Gelenklager
- 42: Gelenklager
- 70: Kurbelwelle
- 71: Kurbel
- 72: Hydraulikzylinder
- 73: Gelenklager
- 80: Kurbelwellenachse

- M: Drehmoment
- s: Strecke
- V: Verfahrweg
- x: Achse

- ϕ: Drehwinkel
- α: Phasenversatz

## Patentansprüche

1. Säulenlose Zweiplatten-Schließeinheit für eine Kunststoffspritzgießmaschine mit einer festen Aufspannplatte (2) und einer beweglichen Ausspannplatte (3) wobei die Schließeinheit (1) eine erste Antriebseinrichtung (4) zum Schließkraftaufbau aufweist, wobei die erste Antriebseinrichtung (4) nicht linearer Bauart ist und der Schließkraftaufbau der Schließeinheit (1) im Wesentlichen von der ersten Antriebseinrichtung (4) bewirkbar ist, wobei
zumindest eine zweite Antriebseinrichtung (5) zum Verfahren der beweglichen Werkzeugaufspannplatte (3) relativ zur festen Werkzeugaufspannplatte (2) vorhanden ist, wobei die Relativbewegung entlang eines Verfahrweges (V) im Wesentlichen von der zumindest einen zweiten Antriebseinrichtung (5) bewirkbar ist, wobei die zumindest eine zweite Antriebseinrichtung (5) parallel zur ersten Antriebseinrichtung (4), d.h. unabhängig von mechanischen Bestandteilen der ersten Antriebseinrichtung (4), mit der festen und der beweglichen Werkzeugaufspannplatte (2 ,3) zusammenwirkend angeordnet ist,
**dadurch gekennzeichnet, dass**
der Kraftfluss beim Aufbau der Schließkraft nicht über den Maschinenrahmen erfolgt.

2. Schließeinheit nach Anspruch (1), **dadurch gekennzeichnet, dass** die erste Antriebseinrichtung (4) ein Schubkurbelantrieb ist.

3. Schließeinheit nach Anspruch 1 oder 2 **dadurch gekennzeichnet, dass** die zumindest eine zweite Antriebseinrichtung (5) linearer Bauart, insbesondere ein Spindelantrieb und/oder ein Zahnstangenantrieb und/oder ein Hydraulikantrieb ist oder die zumindest eine zweite Antriebseinrichtung (5) nicht linearer Bauart ist, insbesondere als ein Schubkurbelantrieb ausgebildet ist.

4. Schließeinheit nach einem der vorangegangenem Ansprüchen **dadurch gekennzeichnet, dass** die zumindest eine zweite Antriebseinrichtung (5) hinsichtlich großer Verfahrgeschwindigkeit ausgelegt ist.

5. Schließeinheit nach einem der vorangegangenem Ansprüchen **dadurch gekennzeichnet, dass** die erste Antriebseinrichtung (4) hinsichtlich einer großen Schließkraft ausgelegt ist.

6. Schließeinheit nach einem der vorangegangenem Ansprüchen **dadurch gekennzeichnet, dass** die zumindest eine zweite Antriebseinrichtung (5) nicht linearer Bauart phasenverschoben zu der ersten Antriebseinrichtung (4) angeordnet ist.

7. Schließeinheit nach einem der vorangegangenem Ansprüchen **dadurch gekennzeichnet, dass** ein Antrieb der ersten Antriebseinrichtung (4) und/oder ein Antrieb der zumindest einen zweiten Antriebseinrichtung (5) an der festen Aufspannplatte (2) oder an einem Maschinengestell angeordnet sind.

8. Schließeinheit nach einem der vorangegangenen Ansprüche **dadurch gekennzeichnet, dass** der Antrieb der ersten Antriebseinrichtung (4) und/oder der Antrieb der zumindest einen zweiten Antriebseinrichtung (5) an der beweglichen Aufspannplatte (3) angeordnet sind.

9. Schließeinheit nach einem der vorangegangenem Ansprüchen **dadurch gekennzeichnet, dass** die erste Antriebseinrichtung (4) der Schließeinheit (1) derart angeordnet ist, dass die maximale Schließkraft auf die bewegliche Werkzeugaufspannplatte (3) und die feste Werkzeugaufspannplatte (2) einwirkt, wenn sich die erste Antriebseinrichtung (4) in einer inneren Totpunktlage befindet.

10. Schließeinheit nach einem der vorangegangenem Ansprüchen **dadurch gekennzeichnet, dass** zumindest die erste Antriebseinrichtung (4) zur Anpassung an unterschiedliche Werkzeuggeometrien eine Einrichtung zur Anpassung der ersten Antriebseinrichtung (4) an unterschiedliche Formhöhen besitzt.

11. Schließeinheit nach einem der vorangegangenem Ansprüchen **dadurch gekennzeichnet, dass** die zweite Antriebseinrichtung (5) nicht linearer Bauart gegenüber der ersten Antriebseinrichtung (4) derart um einen Phasenversatz (α) phasenverschoben angeordnet ist, dass unmittelbar nach dem Öffnen des Werkzeuges bei dem sich der erste Antriebseinrichtung (4) näherungsweise in der inneren Totpunktlage befindet die zweite Antriebseinrichtung (5) in einer Stellung befindet, in der eine Betätigung der zweiten Antriebseinrichtung (5) zu einer maximalen Wegänderung der beweglichen Werkzeugaufspannplatte (3) relativ zur festen Aufspannplatte (2) bewirkt.

12. Schließeinheit nach einem der vorangegangenem Ansprüchen **dadurch gekennzeichnet, dass** der Phasenversatz (α) zwischen der ersten Antriebseinrichtung (4) und der zweiten Antriebseinrichtung (5) 70° bis 110°, besonders bevorzugt 80° bis 100° beträgt.

13. Spritzgiessmaschine aufweisend eine Schließeinheit (1) nach einem der vorangegangenen Ansprüche.

## Claims

1. A column-less dual-platen clamping unit for α plastics injection moulding machine with α fixed clamping platen (2) and α moving clamping platen (3) wherein the mould clamping unit (1) has α first drive unit (4) to build up the clamping force, wherein the first drive unit (4) is of α non-linear construction and the clamping force can be built up in the mould clamping unit (1) substantially by the first drive unit (4), wherein
at least one second drive unit (5) is provided to move the moving mould clamping platen (3) relative to the fixed mould clamping platen (2), wherein the relative movement can be effected along α travel path (V) substantially by the at least one second drive unit (5), wherein the at least one second drive unit (5) is arranged parallel to the first drive unit (4), i.e. independently of mechanical components of the first drive unit (4), so as to interact with the fixed and the moving mould clamping platen (2, 3)
**characterized in that**
the flux of force in the build-up of the clamping force does not take place via the machine frame.

2. The clamping unit according to Claim (1), **characterized in that** the first drive unit (4) is α slider crank drive.

3. The clamping unit according to Claim 1 or 2, **characterized in that** the at least one second drive unit (5) is of linear construction, in particular α spindle drive and/or α rack-and-pinion drive and/or α hydraulic drive, or the at least one second drive unit (5) is of non-linear construction, in particular is constructed as α slider crank drive.

4. The clamping unit according to one of the preceding claims, **characterized in that** the at least one second drive unit (5) is designed in consideration of great movement speed.

5. The clamping unit according to one of the preceding claims, **characterized in that** the first drive unit (4) is designed in consideration of α great clamping force.

6. The clamping unit according to one of the preceding claims, **characterized in that** the at least one second drive unit (5) of non-linear construction is arranged in α phase-shifted manner to the first drive unit (4).

7. The clamping unit according to one of the preceding claims, **characterized in that** α drive of the first drive unit (4) and/or α drive of the at least one second drive unit (5) are arranged on the fixed clamping platen (2) or on a machine frame.

8. The clamping unit according to one of the preceding claims, **characterized in that** the drive of the first drive unit (4) and/or the drive of the at least one second drive unit (5) are arranged on the moving clamping platen (3).

9. The clamping unit according to one of the preceding claims, **characterized in that** the first drive unit (4) of the clamping unit (1) is arranged such that the maximum clamping force acts on the moving mould clamping platen (3), and the fixed mould clamping platen (2), when the first drive unit (4) is situated in an inner dead centre position.

10. The clamping unit according to one of the preceding claims, **characterized in that** for adapting to different mould geometries, at least the first drive unit (4) has an arrangement for adapting the first drive unit (4) to different mould heights.

11. The clamping unit according to one of the preceding claims, **characterized in that** the second drive unit (5) of non-linear construction is arranged in a phase-shifted manner with respect to the first drive unit (4) by a phase offset (α) such that immediately after the opening of the mould, in which the first drive unit (4) is situated approximately in the inner dead centre position, the second drive unit (5) is situated in a position in which an actuation of the second drive unit (5) brings about a maximum change of path of the moving mould clamping platen (3) relative to the fixed clamping platen (2).

12. The clamping unit according to one of the preceding claims, **characterized in that** the phase offset (α) between the first drive unit (4) and the second drive unit (5) is 70° to 110°, particularly preferably 80° to 100°.

13. An injection moulding machine having a clamping unit (1) according to one of the preceding claims.

## Revendications

1. Unité de fermeture à deux plateaux sans colonne pour une machine de moulage par injection de matière plastique comprenant un plateau de serrage fixe (2) et un plateau de serrage mobile (3), dans lequel l'unité de fermeture (1) présente un premier dispositif d'entraînements (4) pour la montée de force de fermeture, dans lequel le premier dispositif d'entraînements (4) est d'une construction non-linéaire et la montée de force de fermeture de l'unité de fermeture (1) peut être effectuée par le premier dispositif d'entraînements (4), dans lequel
au moins un second dispositif d'entraînements (5) est prévu pour déplacer le plateau de serrage d'outil mobile (3) par rapport au plateau de serrage d'outil fixe (2), dans lequel le mouvement relatif peut être effectué essentiellement par l'au moins un second dispositif d'entraînements (5) le long d'un trajet (V), dans lequel l'au moins un second dispositif d'entraînements (5) est disposé parallèlement au premier dispositif d'entraînements (4), c'est à dire indépendamment de composantes mécaniques du premier dispositif d'entraînements (4), en coopération avec les plateaux de serrage fixe et mobile (2, 3),
**caractérisée en ce que**
le flux de force lors de la montée de force de fermeture ne se fait pas par le biais du bâti de la machine.

2. Unité de fermeture selon la revendication 1, **caractérisée en ce que** le premier dispositif d'entraînements (4) est un entraînement à bielle et manivelle.

3. Unité de fermeture selon la revendication 1 ou 2, **caractérisée en ce que** l'au moins un second dispositif d'entraînements (5) est d'une construction linéaire, est particulièrement un entraînement à broche et/ou un entraînement à crémaillère et/ou un entraînement hydraulique ou bien l'au moins un second dispositif d'entraînements (5) est d'une construction non-linéaire, est conçu en particulier en tant qu'un entraînement à bielle et manivelle.

4. Unité de fermeture selon l'une des revendications précédentes, **caractérisé en ce que** l'au moins un second dispositif d'entraînements (5) est conçu pour une grande vitesse de déplacement.

5. Unité de fermeture selon l'une des revendications précédentes, **caractérisé en ce que** le premier dispositif d'entraînements (4) est conçu pour une grande force de fermeture.

6. Unité de fermeture selon l'une des revendications précédentes, **caractérisé en ce que** l'au moins un second dispositif d'entraînements (5) de construction non-linéaire est disposé en décalage de phase par rapport au premier dispositif d'entraînements (4).

7. Unité de fermeture selon l'une des revendications précédentes, **caractérisé en ce qu'**un entraînement du premier dispositif d'entraînements (4) et/ou un entraînement de l'au moins un second dispositif d'entraînements (5) est/sont disposé(s) sur le plateau de serrage fixe (2) ou sur un bâti de machine.

8. Unité de fermeture selon l'une des revendications précédentes, **caractérisé en ce que** l'entraînement du premier dispositif d'entraînements (4) et/ou l'entraînement de l'au moins un second dispositif d'entraînements (5) est/sont disposé(s) sur le plateau de serrage mobile (3).

9. Unité de fermeture selon l'une des revendications précédentes, **caractérisé en ce que** le premier dispositif d'entraînements (4) de l'unité de fermeture (1) est ainsi agencé que la force de fermeture maximale agit sur le plateau de serrage mobile (3) et sur le plateau de serrage fixe (2) lorsque le premier dispositif d'entraînements (4) se trouve dans une position de point mort intérieure.

10. Unité de fermeture selon l'une des revendications précédentes, **caractérisé en ce qu'**au moins le premier dispositif d'entraînements (4) possède un appareillage pour adapter le premier dispositif d'entraînements (4) à différentes hauteurs de moule pour s'adapter à différentes géométries de pièces.

11. Unité de fermeture selon l'une des revendications précédentes, **caractérisé en ce que** le second dispositif d'entraînements (5) de construction non-linéaire est disposé en décalage de phase par rapport au premier dispositif d'entraînements (4), d'un décalage de phase (α) de telle façon que directement après l'ouverture de l'outil, lors de laquelle premier dispositif d'entraînements (4) se trouve approximativement dans la position de point mort intérieure, le second dispositif d'entraînements (5) se trouve dans une position dans laquelle un actionnement du second dispositif d'entraînements (5) provoque une modification de trajet maximale du plateau de serrage mobile (3) par rapport au plateau de serrage fixe (2).

12. Unité de fermeture selon l'une des revendications précédentes, **caractérisé en ce que** le décalage de phase (α) entre le premier dispositif d'entraînements (4) et le second dispositif d'entraînements (5) fait 70° à 110°, de préférence 80° à 100°.

13. Machine de moulage par injection présentant une unité de fermeture (1) selon l'une des revendications précédentes.
